# EUROPEAN PATENT SPECIFICATION

(11) **EP 3 858 676 B1**
(45) Date of publication and mention of the grant of the patent: **06.03.2024**
(21) Application number: 19897745.6
(22) Date of filing: 13.12.2019
(51) Int. Cl.: B60R 1/00, E02F 9/20, E02F 9/24, E02F 9/26, H04N 7/18

(54) **SURROUNDING MONITORING APPARATUS FOR WORK MACHINE**
UMGEBUNGSÜBERWACHUNGSVORRICHTUNG FÜR EINE ARBEITSMASCHINE
APPAREIL DE SURVEILLANCE DES ALENTOURS D'UNE MACHINE DE TRAVAIL

(30) Priority: 19.12.2018 JP 2018237009
(43) Date of publication of application: 04.08.2021
(73) Proprietor: KOBELCO CONSTRUCTION MACHINERY CO., LTD., Hiroshima-shi Hiroshima 731-5161 (JP)
(72) Inventor: SASAKI, Hitoshi, Hiroshima-shi, Hiroshima 731-5161 (JP); YAMAZAKI, Yoichiro, Hiroshima-shi, Hiroshima 731-5161 (JP); SAIKI, Seiji, Hiroshima-shi, Hiroshima 731-5161 (JP)
(74) Representative: TBK
(86) International application number: PCT/JP2019/048892
(87) International publication number: WO 2020/129832

(56) References cited:
- EP-A1- 3 875 697
- WO-A1-2018/008504
- JP-A- 2018 111 981
- JP-A- 2019 060 108
- JP-B2- 5 755 576
- JP-B2- 6 290 497
- JP-B2- S5 755 576
- JP-U- H0 640 066

## Description

### Technical Field

The present invention relates to an apparatus for monitoring the surroundings of a work machine.

### Background Art

Conventionally, a technique for monitoring the surroundings of a work machine is known, for example, the technique being described in Patent Document 1. In order to enable an operator of the work machine to intuitively grasp the position of a person present around the work machine, the technique includes a first alarm output unit (e.g., a right side alarm output unit in the cab) corresponding to a first monitoring space (e.g., on the right side of the work machine) to output an alarm when a person is judged to be present in the first monitoring space, and a second alarm output unit (e.g., a rear side alarm output unit in the cab) corresponding to a second monitoring space (e.g., on the rear side the work machine) different from the first monitoring space to output an alarm when a person is judged to be present in the second monitoring space.

It may, however, occur that the timing of the output of the alarm is inappropriate, which causes the operator of the work machine to feel troublesome. In addition, it may reduce the concentration of the operator on the operation.

### Citation List

### Patent Literature

Patent Literature 1: Japanese Unexamined Patent Publication No. 2018-093501

Document JP 6 290 497 B2 discloses a shovel capable of detecting an object existing in an area that is a dead corner for an operator. The shovel comprises determination means for determining the existence of a predetermined object in the periphery in a state in which the hydraulic actuator is in a non-operation state, a control valve that is provided on an oil path between the hydraulic pump and the hydraulic actuator to control a flow of oil between the hydraulic pump and the hydraulic actuator according to operation of the operation means, and a gate lock valve provided on an oil path between the control valve and the operation means. When it is determined that an object exists, the shovel regulates a flow rate of oil supplied to the hydraulic actuator using a gate lock valve.

Document JP S57 55576 B2 discloses an operation assisting device for assisting the operation of a shovel including a movement control part for controlling the movement of the shovel depending on information shown by a marker image corresponding to a marker at a work site within an image picked up by an image pickup device mounted on the shovel. The operation assisting device further includes a marker decoding part for decoding the information shown by the marker image, and an assist content determining part for determining assist contents depending on the information shown by the marker image. The movement control part controls the movement of the shovel according to the assist contents.

Document EP 3 875 697 A1 discloses technique that can improve the accuracy of determining an object around a shovel under various environmental conditions, based on environmental information around the shovel. A shovel includes an image capturing device configured to obtain a captured image as environmental information around the shovel and a determining unit configured to perform determination related to an object around the shovel based on the captured image obtained by the image capturing device, using a learned model LM on which machine learning has been performed. The learned model ML is updated to an additionally learned model on which additional learning has been performed based on teaching information generated from the captured image of surroundings, obtained by at least one of the shovel or another shovel. The determining unit performs the determination based on the captured image obtained by the image capturing device, in a case where the learned model has been updated, by using the updated learned model.

### Summary of Invention

It is an object of the present invention to provide an apparatus which enables an operator of a work machine to recognize a situation in the surrounding of the work machine at an appropriate timing.

Provided is an apparatus for monitoring the surroundings of a work machine according to claim 1. Further aspects are set out in the dependent claims.

### Brief Description of Drawings

FIG. 1 is a diagram showing a work machine according to an embodiment of the present invention and a remote operation room in which a remote operation for the work machine is performed.
FIG. 2 is a block diagram showing a remote operation system for performing a remote operation of the work machine.
FIG. 3 is a diagram showing an example of a target space that is set around the work machine.
FIG. 4 is a diagram showing a configuration of the remote operation device.
FIG. 5 is a flowchart showing a control operation performed in the remote operation system.

### Description of Embodiments

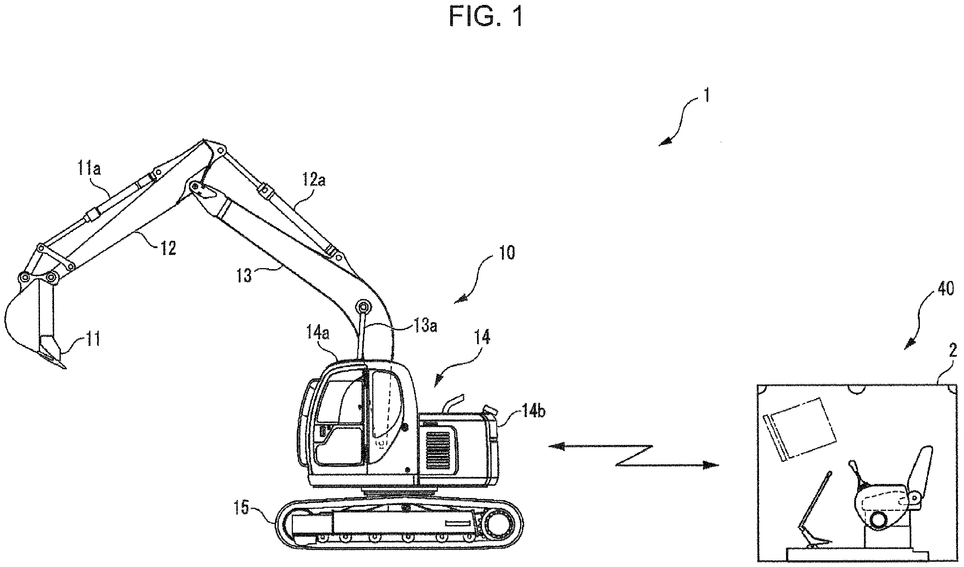

One embodiment of the present invention is described below with reference to FIGS. 1 to 5.

FIG. 1 is a diagram showing a work machine 10 according to the present embodiment and a remote operation room 2 in which a remote operation of the work machine 10 is performed. A remote operation device 40 is provided in the remote operation room 2, allowing an operator to perform a remote operation of the work machine 10 using the remote operation device 40.

The work machine 10 is, for example, a hydraulic excavator, including an attachment 11, an arm 12, a boom 13, a slewing body 14, a traveling body 15 and a plurality of actuators. The plurality of actuators include a not-graphically-shown traveling hydraulic motor, a not-graphically-shown slewing hydraulic motor, and hydraulic cylinders 11a, 12a and 13a.

The traveling body 15 shown in FIG. 1 is a crawler type, configured to be driven by the traveling hydraulic motor. The traveling body 15, alternatively, may be of a wheel type.

The slewing body 14 is disposed on the upper side of the traveling body 15 and driven by the slewing hydraulic motor to be slewed about the yaw axis relatively to the traveling body 15. In the rear part of the slewing body 14 is provided a machine chamber 14b, which accommodates a not-graphically-shown hydraulic equipment (a hydraulic pump, a direction selector valve, a hydraulic oil tank, etc.) and a not-graphically-shown engine which serves as a power source of the hydraulic pump and the like.

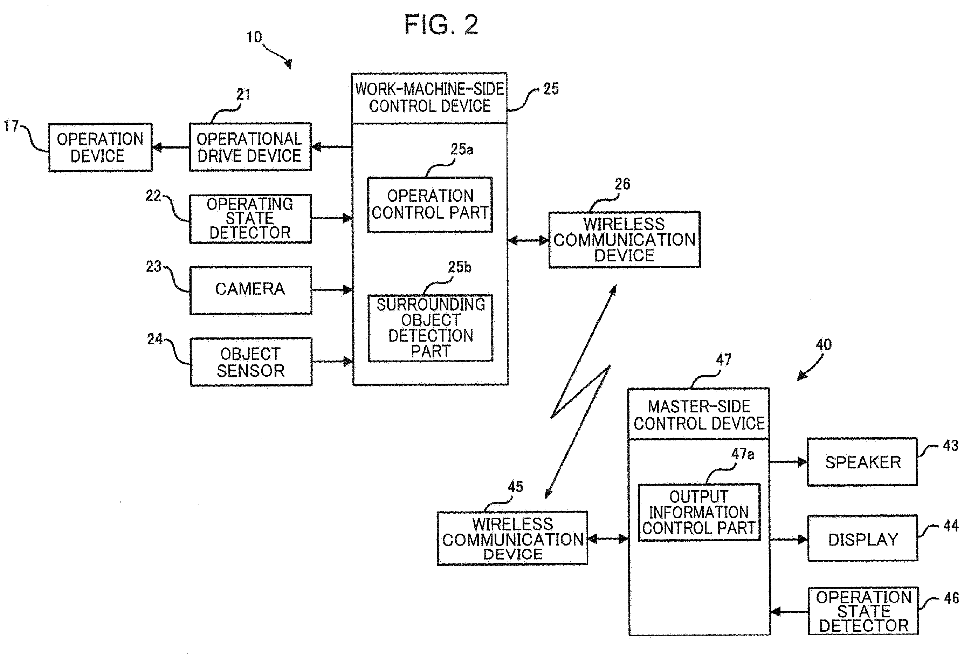

The work machine 10 according to the embodiment allows an operator to board the work machine 10 to perform a control operation of the work machine 10. Specifically, in the front part of the slewing body 14 is provided an operation room 14a, in which an operation device 17 (shown in FIG. 2) is disposed, the operation device 17 allowing an operation for controlling the work machine 10 to be applied to the operation device 17. The operation device 17 includes an operation lever, an operation pedal, an operation switch and the like, which are not graphically shown.

The boom 13 is attached to the front part of the slewing body 14 so as to be vertically rotationally movable and rotationally moved by the expansion and contraction of the hydraulic cylinder 13a. The arm 12 is attached to the distal end of the boom 13 so as to be rotationally movable and rotationally moved by the expansion and contraction of the hydraulic cylinder 12a. The attachment 11 is attached to the distal end of the arm 12 so as to be rotationally movable and rotationally moved by the expansion and contraction of the hydraulic cylinder 11a. The attachment 11 shown in FIG. 1 is a bucket. The attachment 11, however, may be one other than the bucket, for example, a crusher, a breaker, or a magnet.

The plurality of actuators can further include a hydraulic actuator other than the traveling hydraulic motor, the slewing hydraulic motor, and the hydraulic cylinders 11a, 12a, and 13a: for example, a hydraulic actuator for driving a dozer, or a hydraulic actuator that can be included in an attachment of a crusher or the like. Besides, a part of the plurality of actuators may be an actuator other than a hydraulic actuator, for example, an electric actuator. For example, the slewing hydraulic motor may be replaced with an electric actuator.

In the work machine 10, by the operation applied by the operator to the operation lever or the operation pedal of the operation device 17 during the operation of the engine, the travelling hydraulic motor, the slewing hydraulic motor, and the hydraulic cylinders 11a, 12a and 13a, etc., are actuated, thus allowing the operator to perform a control operation of the work machine 10. The relationship between the operations applied to the operation device 17 and respective motions of the plurality of actuators is similar to a known work machine.

In the present embodiment, a remote operation system 1 as shown in FIG. 2 for enabling a remote operation of the work machine 10 to be performed is constructed, and the remote operation system 1 includes a surrounding monitoring apparatus for monitoring the surroundings of the work machine 10. Specifically, the remote operation system 1 includes the remote operation device 40, an operational drive device 21, an operating state detector 22, at least one camera 23, an object sensor 24, a work-machine-side control device 25, and a wireless communication device 26.

The operational drive device 21 is an electric driving device installed on the work machine 10 to drive the operation device 17. The operational drive device 21 includes a plurality of not-graphically-shown electric motors, being disposed in the operation room 14a. The operational drive device 21 is connected to the operation device 17 so as to allow the plurality of electric motors to drive the operation levers and the operation pedals included in the operation device 17, respectively. The operational drive device 21 may be configured to be removable from the work machine 10 when no remote operation of the work machine 10 is performed.

The operating state detector 22 is mounted on the work machine 10 to detect the operating state of the work machine 10. Although not specifically shown, the operating state detector 22 includes, for example, respective detectors that detect respective rotation angles of the attachment 11, arm 12, and boom 13 (or respective strokes of the hydraulic cylinders 11a, 12a, 13a), a detector that detects the slewing angle of the slewing body 14, and a detector that detects the driving speed of the traveling body 15. The operating state detector 22 can further include, for example, a detector that detects the inclination angle of the slewing body 14 or the traveling body 15, and an inertia sensor that detects the angular velocity or the acceleration of the slewing body 14 and the like.

The camera 23 is mounted on an appropriate part of the work machine 10 to photograph a predetermined area around the work machine 10. The camera 23 is mounted, for example, on the ceiling part or the like of the operation room 14a to be allowed to photograph the area frontward of the slewing body 14. The at least one camera 23 may include a plurality of cameras 23 to photograph a plurality of areas around the work machine 10.

The at least one object sensor 24 is a sensor for detecting an object present around the work machine 10, being a component of the surrounding monitoring apparatus. The at least one object sensor 24 includes, for example, a camera, a ranging sensor, a radar or the like. The at least one object sensor 24 preferably includes a plurality of object sensors 24 disposed at respective locations, such as the perimeter of the slewing body 14, to detect an object present around the slewing body 14. The camera 23 may be used as the object sensor 24.

The work-machine-side control device 25 is constituted by one or more electronic circuit units including, for example, a microcomputer, a memory, an interface circuit, and the like, being capable of appropriately acquiring the captured video signal of the camera 23 and respective detection signals of the object sensor 24 and the operating state detector 22, and executing various processes for control of the work machine 10 based on the detection signal. The work-machine-side control device 25 is also capable of performing appropriate communication with the remote operation device 40 through the wireless communication device 26.

The work-machine-side control device 25 has an operation control part 25a and a surrounding object detection part 25b as functions realized by both or one of a hardware and a program (software) mounted thereon.

The operation control part 25a performs operation control of the work machine 10 in response to an operation applied to the operation device 17 or in response to an operation command applied through the wireless communication device 26 from the remote operation device 40. The operation control part 25a is capable of performing control of the operation of the operational drive device 21 (as a result, control of an operation to be applied to the operation device 17) and operation control of the engine.

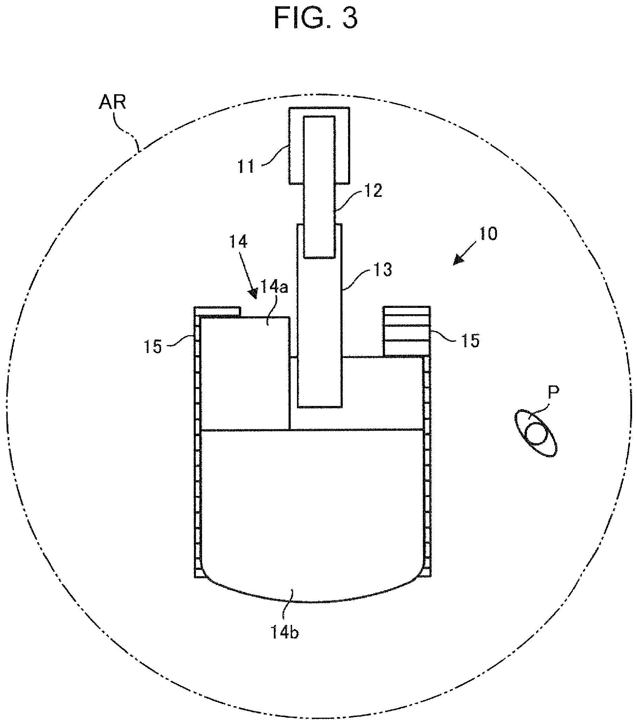

The surrounding object detection part 25b is configured to detect an object, for example, a person, an installation object, that is present in a predetermined target space AR (FIG. 3) around the work machine 10, based on the detection signal of the object sensor 24, corresponding to an object detection element according to the present invention. The target space AR is, for example, an area that is set (defined) around the slewing body 14 as shown in FIG. 3. The target space AR is set in an area where there can occur the contact of the work machine 10 with an object that when the work machine 10 moves in a state where the object is present in the target space AR. When an object P such as a person is present in the target space AR as illustrated in FIG. 3, the surrounding object detection part 25b detects the presence of the object P and the relative position of the object P to the work machine 10. The size or shape of the target space AR can be set variably in accordance with the operating state of the work machine 10.

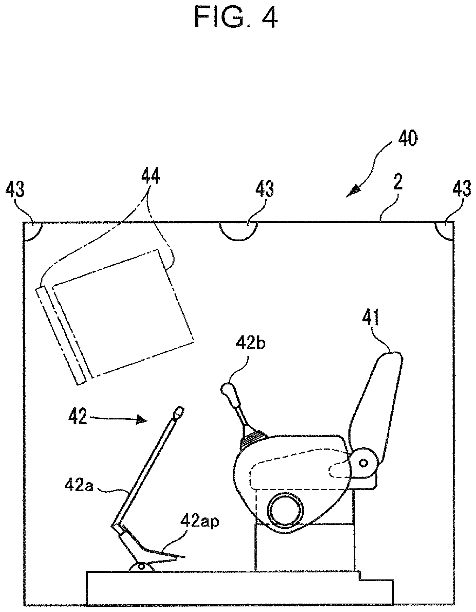

The remote operation device 40 is provided in the remote operation room 2 as shown in FIG. 4, including a seat 41, an operation device 42, at least one speaker 43 and a display 44. The seat 41 allows a not-graphically-shown operator to sit thereon. The operation device 42 allows an operation for remote operation of the work machine 10 to be applied to the operation device 42 by the operator. The at least one speaker 43 is an output device for acoustic information. The display 44 is an output device for visual information.

The remote operation device 40 further includes a wireless communication device 45, an operation state detector 46, and a master-side control device 47 as shown in FIG. 2. The wireless communication device 45 is a device for performing wireless communication with the wireless communication device 26 provided in the work machine 10. The operation state detector 46 detects the state of an operation being applied to the operation device 42. The wireless communication device 45 and the master-side control device 47 may be disposed either inside or outside of the remote operation room 2.

The operation device 42 may have, for example, the same configuration as or a configuration similar to that of the operation device 17 mounted on the work machine 10. The operation device 42 illustrated in FIG. 4 includes an operation lever 42a and a pair of operation levers 42b. The operation lever 42a is located on the front side of the seat 41 so as to allow an operator seated on the seat 41 to apply an operation to the operation lever 42a. The operation lever 42a is provided with an operation pedal 42ap. The pair of operation levers 42b are mounted on respective consoles 41b arranged on the left and right sides of the seat 41, respectively. The operation device 42 may have a configuration different from that of the operation device 17. The operation device 42 may be, for example, a portable type including a joystick, an operation button, and the like.

The operation state detector 46 corresponds to an operation detection element according to the present invention. The operation state detector 46 includes, for example, a potentiometer incorporated in the operation device 42, a contact switch or the like, being configured to output a detection signal indicating the state of the operation applied to each of a plurality of operation parts, namely, the operation levers 42a and 42b, the operation pedal 42ap, and the like.

The at least one speaker 43 preferably includes a plurality of speakers 43, which are disposed, for example, at a plurality of locations around the remote operation room 2, for example, on the front part, rear, and left and right sides of the remote operation room 2, respectively. The display 44 is composed of, for example, a liquid crystal display, a head-up display or the like, and disposed on the front side of the seat 41 so as to allow an operator sitting on the seat 41 to visually recognize the display 44. In the present embodiment, the at least one speaker 43 and the display 44 correspond to an output device according to the present invention.

The master-side control device 47 is constituted by one or more electronic circuit units, including, for example, a microcomputer, a memory, an interface circuit, and the like, being capable of appropriately acquiring the detection signal of the operation state detector 46. The master-side control device 47 is capable of performing appropriate communication with the work-machine-side control device 25 through the wireless communication device 45 and the wireless communication device 26 of the work machine 10. The master-side control device 47 is capable of, for example, transmitting an operation command for the work machine 10 to the work-machine-side control device 25 and receiving various information from the work machine 10. The operation command is defined by the state of operation in the operation device 42, the state being detected by the operation state detector 46. The various information includes, for example, an image photographed by the camera 23, detection information about an object around the work machine 10, detection information about the operating state of the work machine 10.

The master-side control device 47 has a function as an output information control part 47a. This function is provided by at least one of a hardware and a program (software) installed in the master-side control device 47, configured to control the speaker 43 and the display 44. The output information control part 47a corresponds to an output control element in the present invention.

Next will be described the operation of the remote operation system 1 according to the present embodiment in detail.

In order to start the work by the work machine 10, the operator seated on the seat 41 in the remote operation room 2 performs a predetermined start operation (for example, an operation of turning on a not-graphically-shown start switch included in the operation device 42 or a voice input operation). In response thereto, the master-side control device 47 transmits a start command to the work-machine-side control device 25 via the wireless communication devices 45 and 26.

The operation control part 25a of the work-machine-side control device 25 executes a control processing for starting the engine of the work machine 10 in response to the reception of the start command. When the start of the engine is completed, the work-machine-side control device 25 transmits the engine start completion information indicating the completion to the master-side control device 47 through the wireless communication devices 26 and 45. The surrounding object detection part 25b of the work-machine-side control device 25 starts a processing of detecting presence or absence of an object such as a person in the target space AR around the work machine 10 based on the detection signal of the object sensor 24.

Upon receiving the engine start completion information, the master-side control device 47 makes the at least one speaker 43 output audio information indicating the completion of the engine start of the work machine 10, or makes the display 44 display information indicating the completion. This allows the operator to recognize that the engine of the work machine 10 has started.

Furthermore, the master-side control device 47 acquires (receives) the photographed image by the camera 23 of the work machine 10 (including the photographed image of the front side of the slewing body 14), sequentially, through the communication with the work-machine-side control device 25 (received). The master-side control device 47, while making the captured image be displayed on the display 44, executes an initial monitoring processing in cooperation with the work-machine-side control device 25.

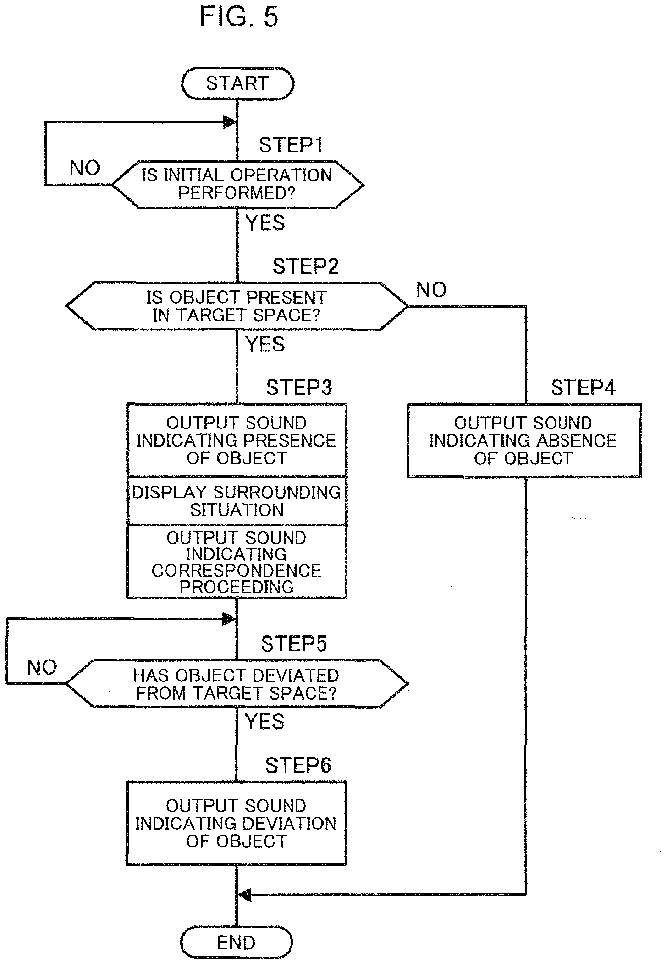

FIG. 5 is a flowchart showing the initial monitoring processing. In STEP1 of FIG. 5, the master-side control device 47 sequentially judges whether or not an initial operation for starting work by the work machine 10 has been performed, on the basis of the output (a detection signal) of the operation state detector 46. In STEP1, the master-side control device 47 performs a detection that the initial operation has been made: for example, the detection of an operation for actuating any of the actuators of the work machine 10 performed in the operation device 42, the operation being an operation of displacing the operation lever 42a or 42b or the operation pedal 42ap to an operation amount exceeding a predetermined dead band or an operation amount immediately before exceeding the dead band, based on the output of the operation state detector 46.

Alternatively, in STEP1, the master-side control device 47 may detect, for example, that an operator has applied an operation for lowering a not-graphically-shown gateway interruption lever mounted on the work machine 10 to the operation device 42, through the operation state detector 46.

For example, the operation device 42 of the remote operation device 40 includes another gateway interruption lever for control operation that is movable up and down similarly to the above gateway interruption lever of the work machine 10, and the operational drive device 21 of the work machine 10 and the like are configured to cause the lever operation lock (that is, blocking hydraulic oil from being supplied to each actuator of the work machine 10) in the work machine 10 to be released in response to the operation of lowering the operation gateway interruption lever to the operation device 42, the operation applied by the operator. The operation of lowering the gateway interruption lever of the remote operation device 40, which is performed by an operator for releasing the lever operation lock when starting the work by the work machine 10, can be regarded as an initial operation.

The master-side control device 47, alternatively, can detect the performance of the initial operation, based on the output of the operation state detector 46 when the operation state detector 46 detects the application of the operation of releasing the lock of the slewing motion of the slewing body 14 to the operation device 42.

In STEP1, alternatively, may be detected as the initial operation an operation applied to the operation device 42 for starting the engine.

After detecting the initial operation (YES in STEP1), the master-side control device 47 judges whether or not an object such as a person is present in the target space AR around the work machine 10 (STEP2). Specifically, the master-side control device 47 acquires detection information of an object provided by the surrounding object detection part 25b of the work-machine-side control device 25 through communication with the work-machine-side control device 25, and judges, based on the detection information, the presence or absence of an object such as a person in the target space AR.

When the surrounding object detection part 25b of the work-machine-side control device 25 detects the presence of an object in the target space AR, the master-side control device 47 receives detection information indicating the presence of the object in the target space AR (including information indicating the relative position or relative orientation of the object to the work machine 10) from the work-machine-side control device 25, thereby judging that the presence of the object is detected (YES in STEP2).

On the other hand, when the surrounding object detection part 25b of the work-machine-side control device 25 does not detect any presence of an object in the target space AR, the master-side control device 47 receives the detection information indicating that from the work-machine-side control device 25, thereby judging that no presence of an object is detected (NO in STEP2).

When it is judged that no presence of the object is detected (NO in STEP2), the master-side control device 47 executes processing in STEP4 and ends the processing (initial monitoring processing) of the flow chart of FIG. 5. In STEP4, the master-side control device 47 makes the at least one speaker 43 output audio information indicating absence of any object in the target space AR around the work machine 10. For example, at least one of the plurality of speakers 43 disposed in the remote operation room 2 outputs audio information indicating that "no obstacle is present in the surroundings".

The output allows an operator to easily recognize that work by the work machine 10 can be commenced without hindrance. The operator, thus allowed to recognize the absence of the obstacle as aural information by sound with no necessity of the movement of the line of sight, can quickly start the work while watching the photographed image that is displayed on the display 44.

When it is judged that an object is present (YES in STEP2), the master-side control device 47 makes the speaker 43 output audio information indicating the presence of the object in the target space AR around the work machine 10 (STEP3). The audio information preferably includes information indicating the relative position or orientation of an object present in the target space AR to the work machine 10. For example, at least one of the plurality of speakers 43 disposed in the remote operation room 2 outputs audio information such as "An object is present diagonally rearward on the right side (or at a position within one meter diagonally rearward on the right side). Please be careful". This output enables an operator to easily recognize that an object is present in the target space AR around the work machine 10 and the position or direction of the object to the work machine 10 even when the object does not appear in the photographed image displayed on the display 44 or when the operator overlooks the presence of the object appearing in the photographed image.

In the case where the kind of an object present in the target space AR, for example, a person or an installation, can be determined, it allows the audio information to include the information indicating the kind of the object.

With respect to the output of the audio information, it is also possible to select the speaker 43 to output the audio information out of a plurality of speakers 43 disposed in the remote operation room 2, or to change the volume of the audio information output from the speaker 43 in response to the presence position or the presence direction of the target in the target space AR.

For example, increasing the volume of the audio information to be output from the speaker 3 as the object whose presence in the target space AR is detected is closer to the work machine 10 enables an operator to recognize the degree of proximity of the object to the work machine 10 based on the volume of the audio information.

Besides, the master-side control device 47 may be configured to make only a specific speaker 43 out of the plurality of speakers 43 around an operator output the audio information, the relationship of the specific speaker 43 with the operator matching the presence position at which an object is present in the target space AR or the presence direction that is the direction of the object, or configured to make the sound of the matching speaker 43 larger than the volume of the other speaker 43. For example, for the case where the presence of an object is detected in a position obliquely rearward to the right of the slewing body 14 of the work machine 10 in the target space AR, the master-side control device 47 may be configured to make only the right and rear speakers 43 out of the front, rear, left and right speakers 43 in the remote operation room 2 output audio information or configured to make the sound volume of the audio information to be output from the right and rear speakers 43 larger than the volume of the audio information to be output from the left and front speakers 43. This enables the operator to recognize in which direction the object is present relatively to the work machine 10 based on the direction in which the audio information is audible or easily heard.

In STEP3, the master-side control device 47 further makes the display 44 display, in some areas thereof, an overhead view image showing the surrounding conditions of the work machine 10. For example, as illustrated in FIG. 3, there are displayed an overhead view image of the work machine 10 and an image showing the target space AR therearound on the display 44, and there is displayed a marker image indicating the object P (or a photographed image of the object) at a place corresponding to the presence position of the object in the image of the target space AR. This display enables the operator to clearly recognize the position where the target is present in the target space AR through the visual information displayed on the display 44.

The overhead view images may be created in accordance with the actual operating state of the work machine 10 detected by the operating state detector 22 of the work machine 10 when the processing of STEP3 is executed. For example, the overhead view image may be generated so as to render the distance from the slewing body 14 to the attachment 11 in the overhead view image of the work machine 10 substantially proportional to the actual longitudinal distance that is estimated on the basis of the detection signal of the operating state detector 22. Besides, in place of or in addition to the overhead view image, the master-side control device 47 may make the display 44 display, for example, the overhead view image of the work machine 10, an image of the target space AR corresponding thereto, and an image of an object detected in the target space AR. For example, when an object P such as a person present in the target space AR is detected by the surrounding object detection part 25b of the work-machine-side control device 25, there may be displayed respective images of the work machine 10, the target space AR, and the object P on the display 44 in the mode shown in FIG. 3.

In STEP3, after making audio information indicating the presence of an object in the target space AR be output from the speaker 43, or successively to the audio information, the master-side control device 47 makes the at least one speaker 43 output audio information indicating precautions that the operator should be aware of with respect to the operation to be applied to the operation device 42. Specifically, the master-side control device 47 makes the at least one speaker 43 output, as information indicating the above-mentioned caution, audio information indicating a correspondence processing to be executed by the operator in response to detection of an object. In accordance therewith, the operator can perform an appropriate correspondence processing.

For example, as the information indicating the correspondence processing, output is audio information containing "start the work after saving (or removing) the object from the surrounding target space". In accordance with the output, the operator can apply a certain operation to the operation device 42 for generating an alarm output around the work machine 10.

Receiving the operation applied by the operator, the master-side control device 47 transmits a generation command of the alarm output to the work-machine-side control part 25. Then, the work-machine-side control device 25 having received the generation command makes a not-graphically-shown speaker provided in the work machine 10 output an alarm sound or an alarm voice for prompting the object to be retracted (or removed) from the target space AR. The alarm output is not limited to an audio alarm output, such as an alarm sound or an alarm voice, but may be a visual (optical) alarm output by a floodlight or the like to the surroundings of the work machine 10.

For example, if the object present in the target space AR is a difficult object to move, such as a fixed object, the master-side control device 47 may make the speaker 43 output such audio information as "the work machine should be moved about xx m in the xx direction". The operator can apply an operation for operating the work machine 10 in accordance with the audio information to the operation device 42. The master-side control device 47 transmits a movement command corresponding to the operation to the work-machine-side control device 25. The operation control part 25a of the work-machine-side control device 25, having received the movement command, controls the operational drive device 21 so as to make the operational drive device 21 apply an operation to the operation device 17, thereby moving the work machine 10 in accordance with the movement command.

In STEP3, in place of or in addition to the audio information indicating a correspondence processing which the operator should execute, the master-side control device 47 may make the speaker 43 output audio information indicating a processing which the operator should not execute, as information indicating a caution. For example, when an object is present rearward in the right side of the slewing body 14 of the work machine 10, the speaker 43 may be made output the audio information of "Do not slew the slewing body to the left side (counterclockwise side)"; when an object is present immediately rearward the work machine 10, the speaker 43 may be made output the audio information containing "Do not move the traveling body backward.".

After executing the processing of STEP3 as described above, the master-side control device 47 sequentially judges whether or not the target has deviated from the target space AR in STEP5. Specifically, the master-side control device 47 acquires detection information on an object provided by the surrounding object detection part 25b of the work-machine-side control device 25 through communication with the work-machine-side control device 25, and sequentially judges presence or absence of an object such as a person in the target space AR, based on the detection information.

When the surrounding object detection part 25b of the work-machine-side control device 25 detects the presence of an object in the target space AR, the master-side control device receives detection information indicating that from the work-machine-side control device 25, thereby judging that the object is present in STEP5. In this instance, the master-side control device 47 repeats the judgment processing of STEP5. At this time, the master-side control device 47 may intermittently repeat making the speaker 43 output the same audio information as the audio information output in STEP3. Besides, similarly to STEP3, it may be continued to display the overhead view image or the like of the work machine 10 on the display 44. In this image, the image portion of the object to be displayed on the display 44 may be moved in accordance with the movement of the object in the target space AR.

The master-side control device 47 thereafter judges that the object has deviated from the target space AR by receiving, from the work-machine-side control device 25, detection information indicating that the surrounding object detection part 25b of the work-machine-side control device 25 does not detect the presence of an object in the target space AR (YES in STEPS). At this point in time, the master-side control device 47 executes the processing of STEP6, ending the processing of the flow chart of FIG. 5.

In STEP6, the master-side control device 47 makes the speaker 43 output audio information indicating the deviation of the object from the target space AR. For example, there is output audio information indicating that the object has gone out of the target space from the speaker 43. An operator is thereby enabled to recognize that there has come a state where work can be started without any trouble, as audio information by voice without requiring any movement of the line of sight. This enables the operator to quickly start the work with viewing the captured image displayed on the display 44.

As described above, according to the present embodiment, an operator is enabled to easily recognize the presence or absence of an object in the target space AR around the work machine 10 by the audio information output from the speaker 43 when the operator starts the work by the work machine 10. The operator, therefore, can easily recognize the surrounding situation of the work machine 10 (presence or absence of an object in the target space AR) with no need for carefully observing the captured image of the surrounding of the work machine 10 displayed on the display 44 in spite of a situation where it is highly necessary to take account of the surrounding situation of the work machine 10.

Furthermore, when an object is present in the target space AR, an overhead view image (or a bird's eye view image) of the work machine 10 and the surroundings thereof together with the image of the object are displayed, thereby allowing the operator to easily recognize the position or direction in which the object is present relatively to the work machine 10.

Besides, when an object is present in the target space AR, audio information indicating an appropriate correspondence processing is output to the operator, allowing the operator to smoothly perform the appropriate correspondence processing. In addition, when there becomes no object in the target space AR, the audio information indicating the absence of any target is output to the operator, thereby allowing the operator to smoothly start the work by the work machine 10.

The present invention is not limited to the embodiments described above, and other embodiments may be employed. Several other embodiments are illustrated below.

In the above embodiment, the application of an initial operation to the operation device 42 by an operator causes audio information indicating the result of detection of the presence of an object in the target space AR around the work machine 10 to be output regardless of whether or not the presence of the object is detected; however, the output control element according to the present invention may be configured to make the output device output the audio information only when the presence of the object in the target space AR is detected. In other words, the output control element may suspend the output of audio information when presence of any object is not detected. In short, the processing of STEP4 in FIG. 5 may be omitted.

In the processing of STEP3 when the presence of an object is detected in the target space AR, it can be omitted to display the overhead view image (or the eye-bird's view image) indicating the surrounding condition of the work machine 10 on the display 44 or to output the audio information indicating the correspondence processing. Besides, the processing of STEPS and STEP6, that is, the processing of outputting audio information indicating that the target has deviated from the target space AR, may be omitted.

Although the initial operation illustrated in the above embodiment are an operation applied to the operation lever of the operation device 42 at the start of work of the work machine 10, an operation for starting the engine, and an operation for releasing the lever operation lock, the initial operation may be detected based on a combination of the above operations. For example, since the start operation of the engine and the release operation of the lever operation lock are performed at the start of the work, it may be set to a condition for detecting the initial operation that the both above operations are detected. Besides, after the start of the work, the detection of the initial operation may be performed based on the detection of the initial stage of the operation applied to the operation lever to move the actuator of the work machine 10.

In the above embodiment, when the operation of the operation device 42 of the remote operation device 40 is temporarily brought into in the neutral state, namely, no operation state, during the work by the work machine 10, or, when the operation of the attachment 11 is started after a lapse of time following the operation for traveling of the work machine 10 or slewing of the slewing body 14, the initial operation is detected and the presence or absence of an object is detected each time. However, in the case where the time during which no operation is input to the operation device 42 is so short as to be equal to or less than a predetermined time, it may be considered that the operation of the operation device 42 is continued, and the master-side control device 47 may be configured not to judge the operation to be the initial operation even if an operation is re-input within the predetermined short time.

Although the work machine 10 according to the embodiment is a hydraulic excavator, the work machine according to the present invention may be a work machine other than a hydraulic excavator, for example, a crane or a forestry machine. The work machine may also be dedicated to remote operation. The work machine according to the present invention, conversely, may be one allowing an operator to board the work machine to make control operation directly in the work machine. In this mode, the initial operation applied to the operation device of the work machine can be detected, for example, based on a detected value of a pilot pressure that is generated in response to the operation applied to the operation device.

It is an object of the present invention to provide an apparatus which enables an operator of a work machine to recognize a situation in the surrounding of the work machine at an appropriate timing.

Provided is an apparatus for monitoring the surroundings of a work machine, comprising: an operation detection element that detects an operation state which is a state of an operation applied to an operation device by an operator for operating the work machine; an object detection element that detects presence or absence of an object in a target space around the work machine; an output device that outputs notification information to the operator; and an output control element that controls the output device to make the output device output a voice indicating a result of a detection by the object detection element in response to the detection of an initial operation state as the operation state by the operation detection element, the initial operation state being a state where an initial operation for starting the work machine is applied to the operation device.

According to this apparatus, in response to the detection of the initial operation state as the operation state, in which an initial operation is applied to the operation device to start the operation of the work machine, a sound is output from the output device to indicate the result of the detection by the object detection element.

For example, encompassed is a mode in which the output control element is configured to make the output device output a sound indicating the presence of the target in the target space in the surrounding of the work machine in response to the detection of the initial operation state by the operation detection element and the detection of the presence of the object in the target space by the object detection element. This mode enables the operator to recognize, through the sense of hearing, that an object is present in the target space around the work machine at the start of operation of the work machine, in which the operator has to take particular account of the surrounding situation of the work machine.

Another mode is also encompassed in which, conversely, the output control element is configured to make the output device output a sound indicating the absence of any target in the target space in the surrounding of the work machine in response to the detection of the absence of any object in the target space by the object detection element in spite of the detection of the initial operation state by the operation detection element. This enables an operator to recognize the absence of any object in the target space around the work machine through the sense of hearing at the start of the motion of the work machine, in which the operator has to take particular account of the surrounding situation of the work machine.

"the motion of the work machine" encompasses not only the motion of the entire work machine, but also the operation of a part of the work machine. Besides, making the output device output the sound indicating the result of the detection by the object detection element may be executed at only either one of the time when the object detection element detects the presence of an object in the target space and the time when the object detection element detects the absence of any object in the target space.

Preferably, the output control element is configured to make the output device further output an image of the work machine and surroundings thereof to indicate a result of a detection by the object detection element (preferably, at least one of a bird's-eye view image and an overhead view image) in response to the detection of the initial operation state by the operation detection element.

The image, which is output by the output device when an object is present in an target space around the work machine at the start of the motion of the work machine in which an operator has to take particular account of the surrounding situation of the work machine, enables the operator to visually recognize the presence of the object in the target space around the work machine.

According to the invention the output control element is configured to make the output device further output a sound related to a precautionary matter on a subsequent operation of the work machine in response to the detection of the initial operation state by the operation detection element and the detection of the presence of the object in the target space by the target detection element.

This enables an operator to recognize, when an object is present in the target space around the work machine at the start of the motion of the work machine in which the operator has to take particular account of the surrounding situation of the work machine, the precautions on the subsequent operation of the work machine in accordance with the situation, in addition to the presence of the object, through the sense of hearing.

The output control element may be configured to make the output device further output a sound indicating that the object has deviated from the target space in response to the detection of the absence of the object in the target space by the object detection element after the object detection element has detected the presence of the object in the target space.

This makes it possible to cause an operator to recognize that an object has gone out of the target space due to a change in situation according to the operation of the work machine or the like that is applied to the operation device by the operator, through the sense of hearing, after causing the operator to recognize the presence of the object in the target space around the work machine through the sense of hearing at the start of the motion of the work machine.

## Claims

1. An apparatus for monitoring surroundings of a work machine (10), comprising:
an operation detection element (46) configured to detect an operation state which is a state of an operation applied to an operation device (42) by an operator for operating the work machine (10);
an object detection element (25b) configured to detect presence or absence of an object in a target space around the work machine (10);
an output device (43, 44) configured to output notification information to the operator; and
an output control element (47a) configured to control the output device (43, 44) so as to make the output device (43, 44) output a sound indicating a result of a detection by the object detection element (25b) in response to a detection of an initial operation state in which an initial operation for starting the work machine (10) is applied to the operation device (42), as the operation state, by the operation detection element (46), **characterized in that**
the output control element (47a) is configured to make the output device (43, 44) further output a sound related to a precautionary matter on a subsequent operation of the work machine (10) in response to the detection of the initial operation state by the operation detection element (46) and a detection of the presence of the object in the target space by the object detection element (25b).

2. The surrounding monitoring apparatus for a work machine according to claim 1, wherein the output control element (47a) is configured to make the output device (43, 44) further output an image of the work machine (10) and surroundings thereof, the image indicating a result of a detection by the object detection element (25b), in response to the detection of the initial operation state by the operation detection element (46).

3. The surrounding monitoring apparatus for a work machine according to claim 1 or 2, wherein the output control element (47a) is configured to make the output device (43, 44) further output a sound indicating that the object has deviated from the target space in response to a detection of absence of the object in the target space by the object detection element (25b) after the detection of the presence of the object in the target space by the object detection element (25b).

## Patentansprüche

1. Vorrichtung zum Überwachen von Umgebungen einer Arbeitsmaschine (10), mit:
einem Bedienerfassungselement (46), das dazu konfiguriert ist, einen Bedienzustand zu erfassen, der ein Zustand einer Bedienung ist, die durch einen Bediener zum Bedienen der Arbeitsmaschine (10) auf eine Bedieneinrichtung (42) aufgebracht wird;
einem Objekterfassungselement (25b), das dazu konfiguriert ist, das Vorhandensein oder Nicht-Vorhandensein eines Objekts in einem Zielraum um die Arbeitsmaschine (10) herum zu erfassen;
einer Ausgabeeinrichtung (43, 44), die dazu konfiguriert ist, Benachrichtigungsinformationen an den Bediener auszugeben; und
einem Ausgabesteuerungselement (47a), das dazu konfiguriert ist, die Ausgabeeinrichtung (43, 44) zu steuern, um die Ausgabeeinrichtung (43, 44) zu veranlassen, einen Ton, der ein Ergebnis einer Erfassung durch das Objekterfassungselement (25b) angibt, als Reaktion auf eine Erfassung eines anfänglichen Bedienzustandes, in dem eine anfängliche Bedienung zum Starten der Arbeitsmaschine (10) auf die Bedieneinrichtung (42) als der Bedienzustand durch das Bedienerfassungselement (46) aufgebracht wird, auszugeben, **dadurch gekennzeichnet, dass**
das Ausgabesteuerungselement (47a) dazu konfiguriert ist, die Ausgabeeinrichtung (43, 44) zu veranlassen, weiterhin einen Ton auszugeben, der sich auf eine Vorsichtsmaßnahme bezüglich einer nachfolgenden Bedienung der Arbeitsmaschine (10) bezieht, als Reaktion auf die Erfassung des anfänglichen Bedienzustandes durch das Bedienerfassungselement (46) und eine Erfassung des Vorhandenseins des Objekts in dem Zielraum durch das Objekterfassungselement (25b).

2. Umgebungsüberwachungsvorrichtung für eine Arbeitsmaschine gemäß Anspruch 1, wobei das Ausgabesteuerungselement (47a) dazu konfiguriert ist, die Ausgabeeinrichtung (43, 44) zu veranlassen, weiterhin ein Bild der Arbeitsmaschine (10) und von Umgebungen von dieser auszugeben, wobei das Bild ein Ergebnis einer Erfassung durch das Objekterfassungselement (25b) angibt, als Reaktion auf die Erfassung des anfänglichen Bedienzustandes durch das Bedienerfassungselement (46).

3. Umgebungsüberwachungsvorrichtung für eine Arbeitsmaschine gemäß Anspruch 1 oder 2, wobei das Ausgabesteuerungselement (47a) dazu konfiguriert ist, die Ausgabeeinrichtung (43, 44) zu veranlassen, weiterhin einen Ton auszugeben, der angibt, dass das Objekt von dem Zielraum abgewichen ist, als Reaktion auf eine Erfassung des NichtVorhandenseins des Objekts in dem Zielraum durch das Objekteerfassungselement (25b), nach der Erfassung des Vorhandenseins des Objekts in dem Zielraum durch das Objekterfassungselement (25b).

## Revendications

1. Appareil de surveillance des alentours d'un engin de chantier (10), comprenant :
un élément de détection de manoeuvre (46) configuré pour détecter un état de manoeuvre, à savoir un état d'une manoeuvre appliquée à un dispositif de manoeuvre (42) par un opérateur pour manoeuvrer l'engin de chantier (10) ;
un élément de détection d'objet (25b) configuré pour détecter la présence ou l'absence d'un objet dans un espace cible autour de l'engin de chantier (10) ;
un dispositif de sortie (43, 44) configuré pour fournir des informations de notification à l'opérateur ; et
un élément de commande de sortie (47a) configuré pour commander le dispositif de sortie (43, 44) de sorte que le dispositif de sortie (43, 44) fournisse un son indiquant un résultat d'une détection par l'élément de détection d'objet (25b) en réponse à une détection d'un état de manoeuvre initial dans lequel une manoeuvre initiale pour démarrer l'engin de chantier (10) est appliquée au dispositif de manoeuvre (42), comme état de manoeuvre, par l'élément de détection de manoeuvre (46), **caractérisé en ce que**
l'élément de commande de sortie (47a) est configuré pour faire en sorte que le dispositif de sortie (43, 44) fournisse en outre un son lié à un principe de précaution vis-à-vis d'une manoeuvre ultérieure de l'engin de chantier (10) en réponse à la détection de l'état de manoeuvre initial par l'élément de détection de manoeuvre (46) et à une détection de la présence de l'objet dans l'espace cible par l'élément de détection d'objet (25b).

2. Appareil de surveillance des alentours d'un engin de chantier selon la revendication 1, dans lequel l'élément de commande de sortie (47a) est configuré pour faire en sorte que le dispositif de sortie (43, 44) fournisse en outre une image de l'engin de chantier (10) et de ses alentours, l'image indiquant un résultat d'une détection par l'élément de détection d'objet (25b), en réponse à la détection de l'état de manoeuvre initial par l'élément de détection de manoeuvre (46).

3. Appareil de surveillance des alentours d'un engin de chantier selon la revendication 1 ou 2, dans lequel l'élément de commande de sortie (47a) est configuré pour faire en sorte que le dispositif de sortie (43, 44) fournisse en outre un son indiquant que l'objet s'est écarté de l'espace cible en réponse à une détection de l'absence de l'objet dans l'espace cible par l'élément de détection d'objet (25b) suite à la détection de la présence de l'objet dans l'espace cible par l'élément de détection d'objet (25b).
